# EUROPÄISCHE PATENTSCHRIFT

(11) **EP 3 659 253 B1**
(45) Veröffentlichungstag und Bekanntmachung des Hinweises auf die Patenterteilung: **10.05.2023**
(21) Anmeldenummer: 18779272.6
(22) Anmeldetag: 18.09.2018
(51) Int. Cl.: H02P 6/185, H02P 29/024

(54) **VERFAHREN ZUM BETRIEB EINES SYNCHRON-RELUKTANZMOTORS UND ANTRIEBSSYSTEM DAMIT**
METHOD FOR OPERATING A SYNCHRONOUS RELUCTANCE MOTOR AND DRIVE SYSTEM COMPRISING THE SAME
PROCÉDÉ DE FONCTIONNEMENT D'UN MOTEUR À RÉLUCTANCE SYNCHRONE ET SYSTÈME D'ENTRAÎNEMENT L'UTILISANT

(30) Priorität: 28.09.2017 EP 17193785
(43) Veröffentlichungstag der Anmeldung: 03.06.2020
(73) Patentinhaber: Siemens Aktiengesellschaft, 80333 München (DE)
(72) Erfinder: GEIER, Ingo, 90556 Cadolzburg (DE); KELLNER, Sven Ludwig, 91052 Erlangen (DE); RATTARO, Luca Silvio, 91052 Erlangen (DE); WEIGEL, Thilo, 90427 Nürnberg (DE)
(74) Vertreter: Siemens Patent Attorneys
(86) Internationale Anmeldenummer: PCT/EP2018/075155
(87) Internationale Veröffentlichungsnummer: WO 2019/063355

(56) Entgegenhaltungen:
- EP-A1- 2 192 413
- EP-B1- 3 704 790
- CN-U- 203 151 413
- US-A1- 2011 089 876
- KIM SANG-IL ET AL: "A New Rotor Position Estimation Method of IPMSM Using All-Pass Filter on High-Frequency Rotating Voltage Signal Injection", IEEE TRANSACTIONS ON INDUSTRIAL ELECTRONICS, IEEE SERVICE CENTER, PISCATAWAY, NJ, USA, Bd. 63, Nr. 10, 1. Oktober 2016 (2016-10-01), Seiten 6499-6509, XP011622360, ISSN: 0278-0046, DOI: 10.1109/TIE.2016.2592464 [gefunden am 2016-09-09]
- CHEN ZHE ET AL: "Sensorless Control for SPMSM With Concentrated Windings Using Multisignal Injection Method", IEEE TRANSACTIONS ON INDUSTRIAL ELECTRONICS, IEEE SERVICE CENTER, PISCATAWAY, NJ, USA, Bd. 61, Nr. 12, 1. Dezember 2014 (2014-12-01), Seiten 6624-6634, XP011558837, ISSN: 0278-0046, DOI: 10.1109/TIE.2014.2316257 [gefunden am 2014-09-12]
- LARA JORGE ET AL: "Performance study of switching frequency signal injection algorithm in PMSMs for EV propulsion: A comparison in stator and rotor coordinates", 2014 IEEE 23RD INTERNATIONAL SYMPOSIUM ON INDUSTRIAL ELECTRONICS (ISIE), IEEE, 1. Juni 2014 (2014-06-01), Seiten 865-870, XP032624090, DOI: 10.1109/ISIE.2014.6864725
- DE KOCK H W ET AL: "Anisotropy Comparison of Reluctance and PM Synchronous Machines for Position Sensorless Control Using HF Carrier Injection", IEEE TRANSACTIONS ON POWER ELECTRONICS, INSTITUTE OF ELECTRICAL AND ELECTRONICS ENGINEERS, USA, Bd. 24, Nr. 8, 1. August 2009 (2009-08-01) , Seiten 1905-1913, XP011271896, ISSN: 0885-8993, DOI: 10.1109/TPEL.2009.2017537

## Beschreibung

Die Erfindung betrifft ein Verfahren zum Betrieb einer elektrischen Maschine, insbesondere einen Synchron-Reluktanzmotor.

Die Erfindung betrifft weiter ein Antriebssystem mit einem Stromrichter zur Durchführung eines derartigen Verfahrens.

Der Betrieb einer Synchronmaschine ist in vielen Anwendungsbereichen sicher durchzuführen. Zum sicheren Betrieb der Synchronmaschine wird beispielsweise ein Messsystem, wie z.B. ein Geber, verwendet. Mit einem Geber kann eine Vielzahl von Sicherheitsfunktionen realisiert werden. Für den sicheren Betrieb von elektrischen Maschinen, wie insbesondere einer Synchronmaschine, sind häufig Sicherheitsfunktionen zur Begrenzung von Drehzahlen, Geschwindigkeiten, Achspositionen usw. erforderlich. Hierzu werden Frequenzumrichter mit integrierten Sicherheitsfunktionen eingesetzt, oder auch Sicherheits-SPSen, Drehzahlwächter usw. Für die zugehörige Sensorik zur Erfassung von Achspositionen oder Drehwinkeln an Spindeln werden größtenteils Positionsgeber mit Sin/Cos-Schnittstelle verwendet. Bei diesen Produkten gibt es zunehmend sichere Ausführungen, die für den Einsatz in einem bestimmten Performance Level (PL) oder SIL1 vorgesehen sind.

Elektrische Maschinen, wie Synchronmaschinen, können auch geberlos betrieben werden. Aus der DE 197 03 248 A1 ist beispielsweise ein Verfahren und eine Vorrichtung zur Bestimmung einer Rotorwinkelgeschwindigkeit einer geberlosen, feldorientiert betriebenen Drehfeldmaschine bekannt.

Aus der EP 2 023 479 B1 ist ein System zur nahtlosen Geschwindigkeits- und/oder Lageermittlung einschließlich Stillstand bei einem Permanentmagnet-Läufer einer elektrischen Maschine bekannt. Es ist ein Verfahren zur Ermittlung einer elektrischen Antriebs-Geschwindigkeit und/oder -Lage aus einer Messung eines mehrphasigen Statorstroms beschrieben.

Aus der EP 2 226 929 A1 ist ein Plausibilitäts-Überwachungssystem für Bewegungsmessungen an einer elektrischen Antriebseinrichtung bekannt. Bei einem Verfahren zur Überwachung einer Bewegungsmessung an einer elektrischen Antriebseinrichtung auf Plausibilität, wird die Bewegungsmessung eines Gebers überwacht. Anhand von Messungen von elektrischen Strömen in der Antriebseinrichtung werden ein oder mehrere Schätzwerte für die Lage, Geschwindigkeit und/oder Beschleunigung der Antriebseinrichtung erzeugt, wobei der oder die Schätzwerte auf Entsprechung mit einem oder mehreren, aus den Geber-Ausgangssignalen erzeugten Messwerten verglichen werden.

Mit der Nichtpatentliteratur "A New Rotor Position Estimation Method of IPMSM Using All-Pass Filter on High-Frequency Rotating Voltage Signal Injection" (KIM SANG-IL ET AL), IEEE TRANSACTIONS ON INDUSTRIAL ELECTRONICS, IEEE D1 SERVICE CENTER, PISCATAWAY, NJ, USA, Bd. 63, Nr. 10, 1. Oktober 2016, Seiten 6499-6509, XP011622360, ISSN: 0278-0046, DOI: 10.1109/TIE.2016.2592464 wird ein Verfahren zur Rotorpositionsschätzung für einen Synchronmotor mit innenliegenden permanenterregten Magneten (IPMSM) vorgeschlagen. Dabei werden die Rotorpositionsinformationen aus der Relation zwischen eingespeisten Spannungen und induzierten Strömen mittels eines Hochfrequenz-Spannungsmodells der IPMSM ermittelt.

Die Nichtpatentliteratur "Sensorless Control for SPMSM With Concentrated Windings Using Multisignal Injection Method" (CHEN ZHE ET AL), IEEE TRANSACTIONS ON INDUSTRIAL ELECTRONICS, IEEE SERVICE CENTER, PISCATAWAY, NJ, USA, Bd. 61, Nr. 12, 1. Dezember 2014, Seiten 6624-6634, XP011558837, ISSN: 0278-0046, DOI: 10.1109/TIE.2014.2316257 offenbart ein Verfahren zur sensorlosen Steuerung einer Synchronmaschine mit oberflächenmontierten permanenterregten Magneten und konzentrierten Wicklungen (cwSPMSM). Zur Realisierung der sensorlosen Steuerung wird ein Multisignal-Einspeiseverfahren vorgeschlagen. Dieses Verfahren speist Spannungen unterschiedlicher Frequenzen mittels Hochfrequenz-Signalen in die Synchronmaschine, wobei die Frequenzbestandteile des Strom-Antwortsignals demoduliert und danach zusammengefügt werden. Im Ergebnis wird ein hervorgehobenes Signal erzeugt, welches zur Identifizierung der Rotorstellung verwendet wird.

Aus der Nichtpatentliteratur "Anisotropy Comparison of Reluctance and PM Synchronous Machines for Position Sensorless Control Using HF Carrier Injection" (DE KOCK H W ET AL:), IEEE TRANSACTIONS ON POWER ELECTRONICS, INSTITUTE OF ELECTRICAL AND ELECTRONICS ENGINEERS, USA, Bd. 24, Nr. 8, 1. August 2009, Seiten 1905-1913, XP011271896, ISSN: 0885-8993, DOI: 10.1109/TPEL.2009.2017537 ist eine sensorlose Positionssteuerung einer permanentmagneterregten Reluktanz-Synchronmaschine bekannt, welche bei Drehzahl Null und auch bei niedriger Drehzahl der Synchronmaschine möglichst unter Verwendung einer HF-Spannungseinspeisung und geeigneter Demodulation durchführbar ist. Eine sogenannte hervorgehobene Position der Rotorlage, welche durch das sensorlose HF-Schema verfolgt wird, unterscheidet sich von der tatsächlichen Rotorposition, wobei die Differenz sowohl Offset- wie auch variierende Rotorlage-Komponenten enthält.

Die EP 3 704 790 B1 ist Stand der Technik nach Art. 54(3) EPÜ und offenbart ein System zur Überwachung der Rotorposition, wobei die Rotorposition über zwei Kanäle berechnet wird, wobei der Informationskanal, der die mit einfacher Rotordrehzahl umlaufende Komponente auswertet, ein Signal liefert, das mit steigender Drehzahl verbesserte Information enthält und dass ein Informationskanal, der die mit doppelter Rotordrehzahl umlaufende Komponente auswertet, eine über die Drehzahl weitgehend konstante Qualität bereitstellt.

Eine Aufgabe der Erfindung ist es ein alternatives Betriebsverfahren für eine elektrische Maschine anzugeben, wobei es sich bei dem alternativen Betriebsverfahren insbesondere um ein sicheres Verfahren handelt.

Eine Lösung der Aufgabe gelingt bei einem Verfahren nach Anspruch 1 bzw. bei einem Antriebssystem nach Anspruch 7. Ausgestaltungen ergeben sich auch nach den Ansprüchen 2 bis 6 bzw. 8 und 9.

Bei einem Verfahren zum Betrieb einer elektrischen Maschine, welche insbesondere eine Synchronmaschine ist, wird ein erstes Prüfsignal in die elektrische Maschine eingespeist. Die elektrische Maschine ist insbesondere eine Synchron-Reluktanzmaschine. Die Synchron-Reluktanzmaschine weist insbesondere einen Flusssperrenschnitt oder ausgeprägte Pole auf. Die Synchron-Reluktanzmaschine ist insbesondere derart ausgebildet, dass deren Rotor keine Permanentmagnete aufweist, also frei von Permanentmagneten ist. Ein erstes Antwortsignal wird gemessen und/oder ermittelt, wobei eine erste Zustandsgröße für den Rotor der elektrischen Maschine abhängig vom ersten Prüfsignal, also insbesondere abhängig vom ersten Antwortsignal ermittelt wird. Es wird eine zweite Zustandsgröße für den Rotor der elektrischen Maschine ermittelt, wobei die erste Zustandsgröße und die zweiten Zustandsgrößen gemeinsam ausgewertet werden. Das erste Antwortsignal ist insbesondere abhängig vom ersten Prüfsignal. Das Antwortsignal ist beispielsweise eine Impulsantwort, eine Sprungantwort, etc. Das Antwortsignal basiert insbesondere auf der Messung einer Spannung und/oder eines Stromes der elektrischen Maschine. Die elektrische Maschine wird mittels eines Stromrichters gespeist. Mittels des Stromrichters wird das Prüfsignal in die elektrische Maschine gespeist. Die erste Zustandsgröße, wie beispielsweise eine Rotordrehzahl oder eine Rotorposition, wird insbesondere mathematisch auf Basis der gemessenen Spannungen und/oder Ströme ermittelt. Auch die zweite Zustandsgröße, wie beispielsweise eine Rotordrehzahl oder eine Rotorposition, wird insbesondere mathematisch auf Basis der gemessenen Spannungen und/oder Ströme ermittelt. Durch die Ermittlung der ersten Zustandsgröße und der zweiten Zustandsgröße kann ohne die Verwendung eines Geber-Messsystem ein sicherer Betrieb der elektrischen Maschine ermöglicht werden, da beispielsweise eine sichere Ermittlung der Rotordrehzahl und/oder der Rotorposition möglich ist. So kann auch bei einer geberlosen Regelung einer elektrischen Maschine, wie z.B. einer Synchronmotoren, bis zum Stillstand ein sicherer Betrieb gewährleistet werden. Insbesondere können geberlose Synchronmotoren als lagegeregelte Achsen betrieben werden, wobei sich über Algorithmus sowohl die Position des Rotors als auch die Position einer Mechanik errechnen lässt.

Das Prüfsignal kann als ein Eingangssignal für ein System, wie eine elektrische Maschine betrachtet werden, um ein Ausgangssignal, also ein Antwortsignal, zu erhalten. Eingangssignale zur Generierung von Antwortsignalen können auch als Testsignal bezeichnet werden.

In einer Ausgestaltung des Verfahrens wird für die Ermittlung der zweiten Zustandsgröße ein zweites Prüfsignal in die elektrische Maschine eingespeist, wobei ein zweites Antwortsignal gemessen und/oder ermittelt wird, wobei die zweite Zustandsgröße abhängig vom zweiten Antwortsignal ermittelt wird.

In einer Ausgestaltung des Verfahrens kann als zweites Antwortsignal auch eine Sollgröße einer Transvektorregelung der elektrischen Maschine verwendet werden.

Das zweite Prüfsignal kann sich in einer Ausgestaltung des Verfahrens zum ersten Prüfsignal zumindest durch eines der folgenden Kriterien unterscheiden:
- das erste Prüfsignal ist zum zweiten Prüfsignal zeitlich versetzt;
- das erste Prüfsignal weist eine zum zweiten Prüfsignal unterschiedliche Amplitude auf oder
- das erste Prüfsignal weist eine zum zweiten Prüfsignal unterschiedliche Signalfrequenz auf.

In einer Ausgestaltung des Verfahrens erfolgt die Ermittlung eines Zustandes der elektrischen Maschine in zwei getrennten Kanälen. Durch die zweikanalige Ermittlung des Zustandes, wie z.B. der Rotordrehzahl oder der Rotorposition, kann ein sicherer Betrieb der elektrischen Maschine ermöglicht werden. Die Zweikanaligkeit kann beispielsweise durch zwei Prüfsignale mit jeweils einem Antwortsignal erreicht werden, aber auch mit einem Prüfsignal und zwei daraus resultierenden Antwortsignalen. Für eine sichere Positionierung ist insbesondere eine sichere Lageinformation über zwei getrennte Kanäle zu berechnen. Diese kann z.B. über eine sichere Auswertung der Spannungen und/oder Ströme der elektrischen Maschine über zwei getrennte Kanäle ermittelt werden. Beispielhafte kann in einer Ausgestaltung für beide Kanäle das gleiche sichere Prüfsignal verwendet werden.

In einer Ausgestaltung des Verfahrens werden zur Ermittlung eines bestimmten Zustandes der elektrischen Maschine zwei Zustandsgrößen verwendet, welche geberlos ermittelt werden. Damit kann der eine Zustand der elektrischen Maschine über zwei Kanäle geberlos sicher ausgewertet werden. Wird auf einen Geber verzichtet ergeben sich Kostenvorteile. Ein geberloser Betrieb der elektrischen Maschine kann diese auch robuster machen und deren Zuverlässigkeit erhöhen.

In einer Ausgestaltung des Verfahrens erfolgt eine Messung des Antwortsignals, also z.B. die Messung einer Spannung und/oder eines Stromes, in einer höheren Frequenz bzw. Abtastrate (z.B. zumindest 50% höher), als dies für die Regelung der elektrischen Maschine notwendig ist, wenn die gemessene Spannung und/oder der gemessene Strom auch als Istwert für die Regelung der elektrischen Maschine verwendet wird.

In einer Ausgestaltung des Verfahrens weist das Prüfsignal eine um 50% höhere Frequenz auf als die maximale Frequenz eines Sollwertes der elektrischen Maschine. Ein Sollwert der elektrischen Maschine ist beispielsweise, eine Rotordrehzahl, eine Strangspannung, ein Spannungszeiger, ein Stromzeiger, ein Flusszeiger, etc.

Erfindungsgemäß werden das erste Prüfsignal und das zweite Prüfsignal zur Ermittlung des gleichen Zustandes des Rotors verwendet, also z.B. zur Ermittlung der Rotorposition und/oder der Rotordrehzahl.

In einer Ausgestaltung des Verfahrens wird, wenn durch die Regelung der elektrischen Maschine kein ausreichend hohes Spannungssignal vorhanden ist, also insbesondere bei der beim Positionieren so wichtigen Drehzahl Null, ein sicheres Einprägen des Prüfsignals (insbesondere Testimpulse) durchgeführt, wobei das Prüfsignal bzw. die Testimpulse auch von der Regelung zur Berechnung des Rotorlagesignals verwendet werden.

Erfindungsgemäß ist das erste Prüfsignal und/oder das zweite Prüfsignal ein überlagertes Signal. Das überlagerte Signal wird einem Signal überlagert, welches zur Regelung der elektrischen Maschine verwendet wird. Die Regelung der elektrischen Maschine ist insbesondere eine feldorientierte Regelung. Beispiele für ein derartiges Signal sind ein Stromsollwert und/oder ein Spannungssollwert und/oder ein Flusssollwert. Diese Sollwerte können insbesondere in einem der in der Regelung verwendeten Koordinatensysteme vorliegen, also z.B. einem αβ-Koordinatensystem oder einem d/q-Koordinatensystem.

In einer Ausgestaltung des Verfahrens ist das erste Prüfsignal und/oder das zweite Prüfsignal ein rotorfestes Signal. Dabei kommt das d/q-Koordinatensystem zu Tragen. In einer Ausgestaltung des Verfahrens ist das erste Prüfsignal und/ oder das zweite Prüfsignal ein statorfestes Signal. Dabei kommt das αβ-Koordinatensystem zu Tragen.

In einer Ausgestaltung des Verfahrens ist das erste Prüfsignal ein statorfestes Prüfsignal und das zweite Prüfsignal ein rotorfestes Prüfsignal.

In einer Ausgestaltung des Verfahrens ist das erste Antwortsignal ein statorfestes Antwortsignal und das zweite Antwortsignal ein rotorfestes Antwortsignal.

In einer Ausgestaltung des Verfahrens wird in einem ersten Kanal der Zustand (z.B. die Rotorlage) der elektrischen Maschine basierend auf einem statorfesten Prüfsignal berechnet und in einem zweiten Kanal basierend auf einem rotorfesten Prüfsignal berechnet. Diese Zweikanaligkeit dient dem sicheren Betrieb der elektrischen Maschine.

Erfindungsgemäß ist das erste Prüfsignal zum zweiten Prüfsignal orthogonal. Demnach werden zwei unterschiedliche Kanäle über orthogonal zueinander stehende Prüfsignale gebildet.

In einer Ausgestaltung des Verfahrens ist der zu ermittelnde Zustand der elektrischen Maschine eine Position, eine Geschwindigkeit und/oder eine Beschleunigung.

In einer Ausgestaltung des Verfahrens ist das erste Prüfsignal und/oder das zweite Prüfsignal momentenbildend.

In einer Ausgestaltung des Verfahrens sind das erste Prüfsignal und/oder das zweite Prüfsignal momentenneutral. Momentenneutral bedeutet, dass das Prüfsignal die Position und/oder die Bewegung des Rotors der elektrischen Maschine nicht beeinflusst.

In einer Ausgestaltung des Verfahrens ist die elektrische Maschine eine geberlose elektrische Maschine. Mittels des beschriebenen Verfahrens ist eine sichere Auswertung der Messwerte und Berechnung der Lage und Drehzahl auch mit geeigneten Formelwerken und/oder Algorithmen möglich.

In einer Ausgestaltung des Verfahrens ist die elektrische Maschine eine Synchronmaschine, insbesondere ein Synchron-Reluktanzmotor.

Erfindungsgemäß werden bei der gemeinsamen Auswertung der ersten Zustandsgröße und der zweiten Zustandsgröße diese Zustandsgrößen miteinander verglichen, wobei bei einer Übereinstimmung dieser beiden Zustandsgrößen ein Zustand der elektrischen Maschine sicher erkannt wird. Bei der Prüfung der Übereinstimmung der beiden Zustandsgrößen kann beispielsweise ein Schwellwert für eine Differenz dieser Größen gesetzt werden, wobei insbesondere nur bei Unterschreitung des Schwellwertes eine sichere Zustandsgrößenerkennung angezeigt wird. Der Zustand bzw. die Zustandsgröße betrifft insbesondere eine Position des Rotors der elektrischen Maschine.

In einer Ausgestaltung des Verfahrens wird für das erste Prüfsignal und/oder das zweite Prüfsignal ein Impulssignal verwendet.

Mit einer der Ausgestaltungen des Verfahrens ist eine geberlose sichere Positionierung und Überwachung von Achsen möglich. Dazu gehören z.B. sowohl geschwindigkeitsbezogene Überwachungsfunktionen, die keinen Lageabsolutwert voraussetzen (unter anderem SOS), als auch Funktionen, die einen sicheren Lageabsolutwert benötigen.

Ein Antriebssystem weist zumindest einen Stromrichter zum Antrieb einer elektrischen Maschine auf, wobei der Stromrichter zur Einprägung eines ersten Prüfsignals in die elektrische Maschine vorgesehen ist. Das Antriebssystem kann zur Durchführung der hier beschriebenen Verfahren vorgesehen sein. Das Antriebssystem weist insbesondere auch eine elektrische Maschine auf, welche mittels des Stromrichters mit elektrischer Energie versorgt werden kann, wobei die elektrische Maschine insbesondere ein Synchron-Reluktanzmotor ist.

In einer Ausgestaltung des Antriebssystems ist der Stromrichter zur Einprägung eines zweiten Prüfsignals in die elektrische Maschine vorgesehen.

In einer Ausgestaltung des Antriebssystems ist zur Erzeugung des ersten Prüfsignals und/oder des zweiten Prüfsignals zumindest ein ASIC mit einem Stromrichter-Steuersatz vorgesehen ist. Das sichere Einprägen des Prüfsignals, wie insbesondere Prüfimpulse (Testimpulse), kann zum Beispiel durch entsprechende Hardware-Implementierung der Prüfimpulse (Testimpulse) geschehen. Dies ist beispielsweise mit ASICs im Stromrichter möglich, welche einen hierfür einsetzbaren Steuersatz aufweisen.

In einer Ausgestaltung des Antriebssystems erfolgt eine sichere Verarbeitung und Aufbereitung von Messwerten z.B. mit entsprechenden Sicherheitsvorkehrungen auf gemeinsamen oder getrennten ASICs oder FPGAs. Gegebenenfalls werden unterschiedliche Kanäle verwendet, wie dies hier auch beschrieben ist.

Mittels des beschriebenen Verfahrens bzw. des beschriebenen Antriebssystems kann durch das sichere Einprägen der Prüfsignale auf einen Geber für die elektrische Maschine verzichtet werden. Hinzu kommt eine darauf aufbauende sichere Auswertung über zwei getrennte Kanäle. Die Implementierung kann wie beschrieben über unterschiedliche Wege geschehen. So kann insbesondere ein robustes und preiswertes Positionieren von Achsen erreicht werden.

Mit Hilfe der beschriebenen Verfahren und/oder der beschriebenen Vorrichtungen lassen sich sicherheitsrelevante Funktionen ausfüllen, wie z.B. eine sichere Absolutlage.

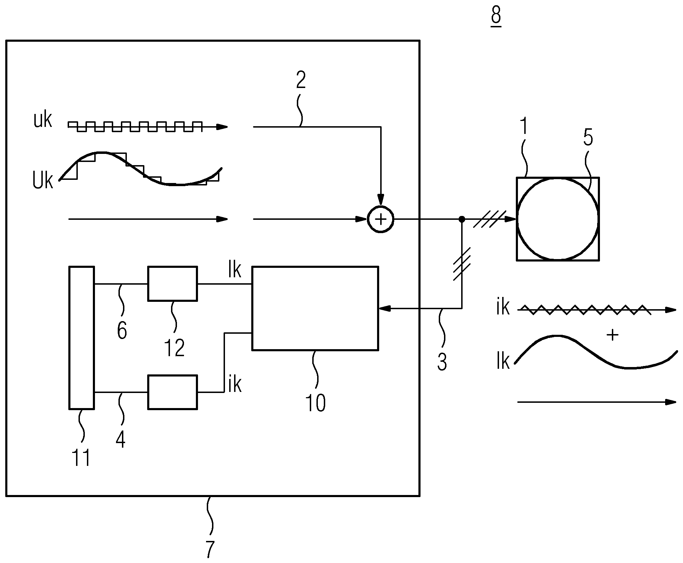

Die Erfindung sowie weitere Ausgestaltungen der Erfindung gemäß den Merkmalen der Unteransprüche werden im Folgenden anhand eines schematisch dargestellten Ausführungsbeispiels in der Zeichnung näher erläutert, ohne dass dadurch eine Beschränkung der Erfindung auf dieses Ausführungsbeispiel erfolgt.

Dargestellt ist ein Antriebssystem 8, welches zumindest einen Stromrichter 7 zum Antrieb einer elektrischen Maschine 1 aufweist, wobei der Stromrichter 7 zur Einprägung eines ersten Prüfsignals 2 in die elektrische Maschine 1 vorgesehen ist. Die elektrische Maschine 1 weist einen Rotor 5 auf. Das erste Prüfsignal 2 weist Spannungssprünge uₖ auf, welche auf eine momentenbildende Spannung Uₖ aufmoduliert sind. Gemäß eines Verfahrens zum Betrieb der elektrischen Maschine 1 wird das erstes Prüfsignal 2 in die elektrische Maschine 1 eingespeist, wobei ein erstes Antwortsignal 3 gemessen wird, wobei eine erste Zustandsgröße 4 für den Rotor 5 der elektrischen Maschine 1 abhängig vom ersten Prüfsignal 2 in einer Auswerteeinrichtung 9 ermittelt wird. Vor der Auswertung wird das Antwortsignal iₖ mittels eines Filters 10 herausgefiltert. Eine zweite Zustandsgröße 6 für den Rotor 5 der elektrischen Maschine 1 wird beispielsweise mittels einer Regelung 12 für die elektrische Maschine 1 ermittelt, wobei die erste Zustandsgröße 4 und die zweiten Zustandsgröße 6 gemeinsam in einer weiteren Auswerteeinrichtung 11 ausgewertet werden. Über den Filter 10 kann auch der sich durch die Spannung Uₖ ausbildende Strom Iₖ ermittelt werden. Bei einer sensorlosen Regelung mit Testpulsauswertung werden - wie gezeigt - der Grundwellenspannung Uₖ (die Grundwellenspannung treibt die Maschine an) additiv kleine Spannungsimpulse uₖ überlagert. Aus der Korrelation dieser Anregung mit den erzeugten Impulsantworten der Ströme Iₖ und iₖ kann dann die Information der Läuferlage und Drehzahl gewonnen werden.

## Patentansprüche

1. Verfahren zum Betrieb einer elektrischen Maschine (1), wobei die elektrische Maschine (1) ein Synchron-Reluktanzmotor ist, wobei ein erstes Prüfsignal (2) in die elektrische Maschine (1) eingespeist wird, wobei ein erstes Antwortsignal (3) gemessen wird, wobei eine erste Zustandsgröße (4) für den Rotor (5) des Synchron-Reluktanzmotors (1) abhängig vom ersten Prüfsignal (2) ermittelt wird, wobei eine zweite Zustandsgröße (6) für den Rotor (5) des Synchron-Reluktanzmotors (1) ermittelt wird, wobei die erste Zustandsgröße (4) und die zweiten Zustandsgröße (6) in einer Auswerteeinrichtung (11) eines Stromrichters (7) gemeinsam ausgewertet werden, wobei für die Ermittlung der zweiten Zustandsgröße ein zweites Prüfsignal in die elektrische Maschine (1) eingespeist wird, wobei ein zweites Antwortsignal gemessen wird, wobei die zweite Zustandsgröße abhängig vom zweiten Antwortsignal ermittelt wird, wobei das erste Prüfsignal (2) und/oder das zweite Prüfsignal ein überlagertes Signal ist, wobei das erste Prüfsignal (2) und das zweite Prüfsignal zur Ermittlung des gleichen Zustandes des Rotors (5) verwendet werden und wobei das erste Prüfsignal (2) zum zweiten Prüfsignal orthogonal ist, wobei bei der gemeinsamen Auswertung der ersten Zustandsgröße (4) und der zweiten Zustandsgröße (6) diese Zustandsgrößen (4,6) miteinander verglichen werden, wobei bei Übereinstimmung dieser Zustandsgrößen ein Zustand der elektrische Maschine (1) sicher erkannt wird und wobei dieser Zustand insbesondere eine Position des Rotors (5) der elektrischen Maschine betrifft.

2. Verfahren nach Anspruch 1, wobei das erste Prüfsignal (2) und/oder das zweite Prüfsignal ein rotorfestes Signal ist oder ein statorfestes Signal ist.

3. Verfahren nach einem der Ansprüche 1 oder 2, wobei der Zustand eine Position, eine Geschwindigkeit und/oder eine Beschleunigung ist.

4. Verfahren nach einem der Ansprüche 1 bis 3, wobei das erste Prüfsignal (2) und/oder das zweite Prüfsignal momentenbildend ist.

5. Verfahren nach einem der Ansprüche 1 bis 4, wobei die elektrische Maschine (1) eine geberlose elektrische Maschine (1) ist.

6. Verfahren nach einem der Ansprüche 1 bis 5, wobei für das erste Prüfsignal (2) und/oder das zweite Prüfsignal ein Impulssignal verwendet wird.

7. Antriebssystem (8), welches zumindest einen Stromrichter (7) zum Antrieb eines Synchron-Reluktanzmotors (1) aufweist, wobei der Stromrichter (7) zur Einprägung eines ersten Prüfsignals (2) in den Synchron-Reluktanzmotor (1) und wobei der Stromrichter (7) zur Durchführung eines Verfahrens nach einem der Ansprüche 1 bis 6 vorgesehen ist.

8. Antriebssystem (8) nach Anspruch 7, wobei der Stromrichter (7) zur Einprägung eines zweiten Prüfsignals in die elektrische Maschine (1) vorgesehen ist.

9. Antriebssystem (8) nach Anspruch 7 oder 8, wobei zur Erzeugung des ersten Prüfsignals (2) und/oder des zweiten Prüfsignals zumindest ein ASIC für einen Steuersatz des Stromrichters (7) vorgesehen ist.

## Claims

1. Method for operating an electric machine (1), wherein the electric machine (1) is a synchronous reluctance motor, wherein a first test signal (2) is fed into the electric machine (1), wherein a first response signal (3) is measured, wherein a first state variable (4) for the rotor (5) of the synchronous reluctance motor (1) is determined as a function of the first test signal (2), wherein a second state variable (6) for the rotor (5) of the synchronous reluctance motor (1) is determined, wherein the first state variable (4) and the second state variable (6) are evaluated together in an evaluation facility (11) of a converter (7), wherein a second test signal is fed into the electric machine (1) in order to determine the second state variable, wherein a second response signal is measured, wherein the second state variable is determined as a function of the second response signal, wherein the first test signal (2) and/or the second test signal is an overlaid signal, wherein the first test signal (2) and the second test signal are used to determine the same state of the rotor (5) and wherein the first test signal (2) is orthogonal to the second test signal, wherein when the first state variable (4) and the second state variable (6) are evaluated together, these state variables (4, 6) are compared with one another, wherein when these state variables agree, a state of the electric machine (1) is reliably identified and wherein this state relates in particular to a position of the rotor (5) of the electric machine.

2. Method according to claim 1, wherein the first test signal (2) and/or the second test signal is a signal fixed to the rotor or a signal fixed to the stator.

3. Method according to one of claims 1 or 2, wherein the state is a position, a speed and/or an acceleration.

4. Method according to one of claims 1 to 3, wherein the first test signal (2) and/or the second test signal is torque-forming.

5. Method according to one of claims 1 to 4, wherein the electric machine (1) is an encoderless electric machine (1).

6. Method according to one of claims 1 to 5, wherein a pulse signal is used for the first test signal (2) and/or the second test signal.

7. Drive system (8) which has at least one converter (7) for driving a synchronous reluctance motor (1), wherein the converter (7) is provided for impressing a first test signal (2) into the synchronous reluctance motor (1) and wherein the converter (7) is provided to carry out a method according to one of claims 1 to 6.

8. Drive system (8) according to claim 7, wherein the converter (7) is provided to impress a second test signal into the electric machine (1).

9. Drive system (8) according to claim 7 or 8, wherein at least one ASIC for a logic pulse of the converter (7) is provided in order to generate the first test signal (2) and/or the second test signal.

## Revendications

1. Procédé pour faire fonctionner une machine (1) électrique, dans lequel la machine (1) électrique est un moteur à réluctance synchrone, dans lequel on injecte un premier signal (2) de contrôle dans la machine (1) électrique, dans lequel on mesure un premier signal (3) de réponse, dans lequel on détermine une première grandeur (4) d'état du rotor (5) du moteur (1) à réluctance synchrone en fonction du premier signal (2) de contrôle, dans lequel on détermine une deuxième grandeur (6) d'état du rotor (5) du moteur (1) à réluctance synchrone, dans lequel on analyse conjointement la première grandeur (4) d'état et la deuxième grandeur (6) d'état dans un dispositif (11) d'analyse d'un convertisseur (7), dans lequel, pour la détermination de la deuxième grandeur d'état, on injecte un deuxième signal de contrôle dans la machine (1) électrique, dans lequel on mesure un deuxième signal de réponse, dans lequel on détermine la deuxième grandeur d'état en fonction du deuxième signal de réponse, dans lequel le premier signal (2) de contrôle et/ou le deuxième signal de contrôle est un signal superposé, dans lequel on utilise le premier signal (2) de contrôle et le deuxième signal de contrôle pour la détermination du même état du rotor (5) et dans lequel le premier signal (2) de contrôle est orthogonal au deuxième signal de contrôle, dans lequel, lors de l'analyse conjointe de la première grandeur (4) d'état et de la deuxième grandeur (6) d'état, on compare entre elles ces grandeurs (4, 6) d'état, dans lequel, si ces grandeurs d'états coïncident, on reconnaît un état de la machine (1) électrique comme sûr, et dans lequel cet état concerne notamment une position du rotor (5) de la machine électrique.

2. Procédé suivant la revendication 1, dans lequel le premier signal (2) de contrôle et/ou le deuxième signal de contrôle est un signal stable de rotor ou un signal stable de stator.

3. Procédé suivant l'une des revendications 1 ou 2, dans lequel l'état est une position, une vitesse et/ou une accélération.

4. Procédé suivant l'une des revendications 1 à 3, dans lequel le premier signal (2) de contrôle et/ou le deuxième signal de contrôle est formateur de couple.

5. Procédé suivant l'une des revendications 1 à 4, dans lequel la machine (1) électrique est une machine (1) électrique sans capteur.

6. Procédé suivant l'une des revendications 1 à 5, dans lequel on utilise un signal pulsé pour le premier signal (2) de contrôle et/ou le deuxième signal de contrôle.

7. Système (8) d'entraînement, qui comporte au moins un convertisseur (7) pour l'entraînement d'un moteur (1) à réluctance synchrone, dans lequel le convertisseur (7) est prévu pour l'injection d'un premier signal (2) de contrôle dans le moteur (1) à réluctance synchrone, et dans lequel le convertisseur (7) est prévu pour effectuer un procédé suivant l'une des revendications 1 à 6.

8. Système (8) d'entraînement suivant la revendication 7, dans lequel le convertisseur (7) est prévu pour l'injection d'un deuxième signal de contrôle dans la machine (1) électrique.

9. Système (8) d'entraînement suivant la revendication 7 ou 8, dans lequel, pour la production du premier signal (2) de contrôle et/ou du deuxième signal de contrôle, il est prévu un ASIC pour un ensemble de commande du convertisseur (7).
